# EUROPÄISCHE PATENTANMELDUNG

(11) **EP 1 707 942 A1**
(43) Veröffentlichungstag der Anmeldung: **04.10.2006**
(21) Anmeldenummer: 06006329.4
(22) Anmeldetag: 28.03.2006
(51) Int. Cl.: G01N 17/00, G01N 1/10, G01N 33/18

(54) **Sielhautaufwuchskörper**

(30) Priorität: 29.03.2005 DE 102005014155
(71) Anmelder: Dimmler, Joachim, 73614 Schorndorf (DE)
(72) Erfinder: Dimmler, Joachim, 73614 Schorndorf (DE)
(74) Vertreter: Dreiss, Fuhlendorf, Steimle & Becker

(57) **Zusammenfassung**

Es wird ein Sielhautaufwuchskörper vorgeschlagen, der es ermöglicht, Proben von Sielhaut aus Abwasserkanälen zu nehmen, ohne dass eine Person zur Probenentnahme in den Abwasserkanal hinabsteigen muss. Dadurch wird in erheblichem Umfang Zeit und Kosten eingespart, außerdem wird eine Gefährdung der mit der Probenentnahme beschäftigten Personen ausgeschlossen und die hygienischen Bedingungen für das Personal verbessern sich erheblich.

## Beschreibung

In Abwasserkanäle, auch Siele genannt, werden manchmal Schadstoffe eingeleitet. Durch die Einleitung von unerlaubten Schadstoffen in das Abwasser wird die Umwelt belastet und es kann zu Störungen beim Betrieb der nachgeschalteten Kläranlage kommen. Außerdem besteht die Gefahr, dass der Klärschlamm wegen der Schadstoffbelastung nicht auf landwirtschaftlich genutzten Flächen ausgebracht werden kann, sondern als Sondermüll auf einer geeigneten Deponie endgelagert werden muss. Dadurch entstehen erhebliche Kosten, die selbstverständlich vom Verursacher zu tragen sind. Weiterhin können erhebliche Kosten bei der Überschreitung abwasserrelevanter Grenzwerte auf den Betreiber der Abwasserbehandlungsanlage zukommen.

Um die Verursacher von unerlaubten Schadstoffeinleitungen festzustellen, ist es bislang notwendig an den Sielwänden Proben der dort aufgewachsenen Sielhaut zu entnehmen und zu analysieren. Durch die Entnahme solcher Proben an verschiedenen Orten des Kanalnetzes ist es in vielen Fällen möglich, den Einleiter eines Schadstoffs eindeutig zu ermitteln.

Zu einer herkömmlichen Sielhautprobenentnahme werden bislang drei Arbeiter benötigt. Eine erste Person steigt, ausgerüstet mit einer Schutzkleidung und mit einem Gaswarngerät, in den Siel und entnimmt die Probe von der Sielwand. Die zwei anderen Personen überwachen die Probenentnahme und stehen für den Fall bereit, dass die erste Person in Gefahr gerät.

Bei dieser Art der Probenentnahme entsteht ein erheblicher Zeitaufwand, der sich auf etwa 1,5 bis 2 Mannstunden für jede Probenentnahme beläuft. Außerdem werden zur Probenentnahme ein Dreibock, Gaswarngeräte, Schutzkleidung und Schutzausrüstung für die einsteigende Person benötigt. Schließlich ist noch zu erwähnen, dass die Schutzkleidung der einsteigenden Person durch das Einsteigen in den Siel verschmutzt wird und infolgedessen entweder vor Ort gereinigt wird oder das Fahrzeug, mit dem die Arbeiter unterwegs sind, auch verunreinigt wird.

Der Erfindung liegt daher die Aufgabe zugrunde, die Probenentnahme von Sielhaut zu erleichtern, insbesondere unter dem Gesichtspunkten der Minimierung des gesundheitlichen Risikos für die betroffenen Arbeiter, der Zeitersparnis und der Einsparung an Ausrüstung.

Diese Aufgabe wird erfindungsgemäß gelöst, durch einen Aufwuchskörper mit einer Fläche zum Anlagern von Sielhaut und mit Mitteln zum Befestigen des Sielhautaufwuchskörpers in einem Abwasserkanal.

### Vorteile der Erfindung

Durch den erfindungsgemäßen mobilen und leicht handhabbaren Sielhautaufwuchskörper ist es möglich, eine Fläche zum Anlagern von Sielhaut, die Teil des Sielhautaufwuchskörpers ist, in den Abwasserkanal und in den Abwasserstrom zu hängen, ohne dass eine Person in den Abwasserkanal hinabsteigen muss. Da an dem erfindungsgemäßen Sielhautaufwuchskörper Befestigungsmittel vorgesehen sind, kann der Sielhautaufwuchskörper beispielsweise an einem der oberen Steigeisen eines Schachtes angebunden oder mit einem Karabiner oder einem Schekel sicher befestigt werden. Dadurch, dass sich der Sielhautaufwuchskörper im Abwasserstrom befindet, wächst an der Fläche eine Sielhaut auf, deren Zusammensetzung der an den Wänden des Abwasserkanals vorhandenen Sielhaut entspricht. Wenn nun der Verdacht einer Umweltverschmutzung besteht, können die Kanaldeckel geöffnet werden unter denen eine Sielhautaufwuchskörper befestigt ist die Sielhautaufwuchskörper können entnommen werden und die am Sielhautaufwuchskörper aufgewachsene Sielhaut in herkömmlicher Weise auf Schadstoffe analysiert werden.

Wesentlicher Vorteil des erfindungsgemäßen Sielhautaufwuchskörpers ist, dass das Einhängen eines Sielhautaufwuchskörpers von einer Person ohne jegliche Gesundheitsgefahr und mit einem sehr geringen Zeitaufwand erfolgen kann.

Es ist nämlich durch die Verwendung der erfindungsgemäßen Sielhautaufwuchskörper nur erforderlich, den Kanaldeckel abzuheben, den Sielhautaufwuchskörper an einem Steigeisen beispielsweise mit einem Karabiner oder einem Schekel oder einem Vorhängeschloss zu befestigen und den Sielhautaufwuchskörper in den Abwasserstrom zu werfen. Danach wird der Kanaldeckel wieder geschlossen. Nach einer Zeit von etwa 1 bis 3 Wochen kann der Sielhautaufwuchskörper aus dem Abwasserstrom entnommen werden und die am Sielhautaufwuchskörper aufgewachsene Sielhaut kann in herkömmlicher Weise analysiert werden.

Mit Hilfe des erfindungsgemäßen Sielhautaufwuchskörpers lassen sich alle Schadstoffe nachweisen, die auch sich in den an den Kanalwänden Sielhaut nachweisen lassen. Insbesondere sind dies Schwermetalle, organische Schadstoffe, wie absorbierbare organische Halogenverbindungen (AOX), polychlorierte Biphenyle (PCB) sowie polychlorierte Dibenzodioxine (PCDD) und Dibenzofurane (PCDF). Somit können mit Hilfe des Sielhautaufwuchskörpers nahezu sämtliche für Abwasser und Klärschlamm gesetzlich geregelten Schadstoffe überwacht werden. Darüber hinaus können auch weitere bisher nicht gesetzlich geregelte Schadstoffgruppen, wie z.B. polycyclische aromatische Kohlenwasserstoffe (PAK), Pentachlorphenol oder Organozinnverbindungen nachgewiesen.

Der Bewuchs der Fläche zum Anlagern von Sielhaut wird gefördert, wenn die Fläche aufgeraut wird. Dies kann beispielsweise durch Sandstrahlen, Schleifen oder Bürsten erfolgen.

Des Weiteren wird das Anlagern einer Sielhaut und das Aufwachsen einer Sielhaut auf der Fläche zum Anlagern von Sielhaut weiter gefördert, wenn die Fläche eine Vielzahl von makroskopischen Erhebungen und Vertiefungen aufweist.

In gleicher Weise ist es auch möglich, das Aufwachsen und Anhaften der Sielhaut zu fördern, in dem die Fläche eine Vielzahl von Öffnungen aufweist. Dabei spielt es naturgemäß keine Rolle, welche Form die Öffnungen haben. Sie können beispielsweise rund oder eckig sein.

Besonders vorteilhaft ist es, wenn die Fläche zum Anlagern von Sielhaut als dreidimensionaler Körper ausgebildet ist. Dadurch kann die Sielhaut in den Körper hinein aufwachsen und haftet besonders fest.

In weiterer vorteilhafter Ausgestaltung der Erfindung ist der Sielhautaufwuchskörper an einem Ende geschlossen, so dass die im Inneren des Sielhautaufwuchskörpers befindliche Sielhaut vor Ästen und anderen festen Körpern, die im Abwasser vorhanden sind, geschützt ist.

Wenn das geschlossene Ende des Körpers als Spitze ausgebildet ist, rutschen solche festen Verunreinigungen vom Sielhautaufwuchskörper ab und strömen weiter im Abwasser zur Kläranlage. Auch das Anlagern von Papier oder ähnlichem wird verhindert.

Im Falle von Mineralöl- oder Lösungsmitteleinleitungen und/oder der Einleitung anderer flüchtiger Stoffe hat es sich als vorteilhaft erwiesen, den Körper mit Aktivkohle zu füllen. In diesem Fall wird der Sielhautaufwuchskörper nicht bis ins Abwasser abgelassen, sondern er wird oberhalb des Wasserspiegels in den Abwasserschacht gehängt. Dadurch können die flüchtigen Schadstoffe, die in die Luft oberhalb des Abwassers ausgasen, von der Aktivkohle aufgenommen und nach der Entnahme des Sielhautaufwuchskörpers in herkömmlicher Weise in einem Labor analysiert werden.

Alternativ zu der Aktivkohle als Füllstoff kann der Sielhautaufwuchskörper auch mit anderen Füllstoffen, insbesondere Seramis, wie sie bei sogenannten Hydrokulturen eingesetzt werden, befüllt werden.

Um den Bewuchs des Sielhautaufwuchskörpers mit einer Sielhaut zu verbessern und zu beschleunigen hat es sich als vorteilhaft erwiesen, wenn der Innenraum des Körper mindestens teilweise mit einem Schwamm, insbesondere einem grobporigen und/oder offenporigen Schwamm, oder einer Aquarienfiltermatte gefüllt ist. Dieser Schwamm oder die Aquarienfiltermatte werden auch mit Sielhaut bewqachsen und sind durch den Sielhautaufwuchskörper vor Nagern geschützt. Selbstverständlich sind gegebenenfalls bei der nachfolgenden Analytik die Blindwerte des Schwamms oder der Aquarienfiltermatte zu berücksichtigen.

Eine besonders einfache und dennoch sehr Mittel zum Befestigen des Sielhautaufwuchskörpers ist ein Seil, insbesondere ein Stahlseil. Durch das Seil ist es möglich die den Sielhautaufwuchskörper sicher, fest und einfach an einem Stegeisen oder etwas Anderem zu befestigen. Beispielsweise kann das Stahlseil an einem Ende eine Schlaufe haben.

Bevorzugt ist die Zugfestigkeit des Seils größer als 1000 N.

Mit Hilfe dieser Schlaufe und unter Zuhilfenahme eines Schekels oder eines Karabiners kann der Sielhautaufwuchskörper innerhalb weniger Sekunden an den Steigeisen eines Schachts in der gewünschten Lage positioniert werden.

Es hat sich als vorteilhaft erwiesen, wenn die Fläche zum Anlagen von Sielhau bzw. Mokroorganismen aus einem Kunststoff, insbesondere einem chemisch inerten Kunststoff hergestellt ist. Als besonders vorteilhaft haben sich Polymere oder Copolymere, insbesondere Polypropylen, Polyethylen, Polystyrol, Poylcarbonat oder Polyester, erwiesen. Diese Aufzählung ist nicht abschließend. Je nach Anwendungsbereich und erwarteten Schadstoffen können selbstverständlich auch andere Materialien als für die Herstellung der Fläche zum Anlagern von Sielhaut eingesetzt werden.

Der Bewuchs des Sielhautaufwuchskörpers mit Bakterien kann weiter gefördert werden, wenn die Fläche beschichtet wird. Insbesondere mit Gelatine, Tapetenkleister, Geliermittel, insbesondere Apfelpektin oder Agar Agar, oder Mischungen dieser Stoffe sind für eine Beschichtung geeignet. Dadurch kann das Aufwachsen soweit beschleunigt werden, dass nach wenigen Tagen bereits eine ausreichende Sielhaut vorhanden ist, um Proben zu entnehmen.

Weitere Vorteile und vorteilhafte Ausgestaltungen der Erfindung werden der nachfolgenden Zeichnung, deren Beschreibung und den Patentansprüchen entnehmbar. Alle in der Zeichnung, deren Beschreibung und den Patentansprüchen genannten Vorteile können sowohl einzeln als auch in beliebiger Kombination miteinander erfindungswesentlich sein.

### Zeichnung

Es zeigen
- Figur 1: eine Seitenansicht eines erfindungsgemäßen Sielhautaufwuchskörpers.
- Figur 2: ein Querschnitt durch ein erstes Ausführungsbeispiels eines erfindungsgemäßen Sielhautaufwuchskörpers und
- Figur 3: ein Querschnitt durch ein zweites Ausführungsbeispiel.

### Beschreibung der Ausführungsbeispiele

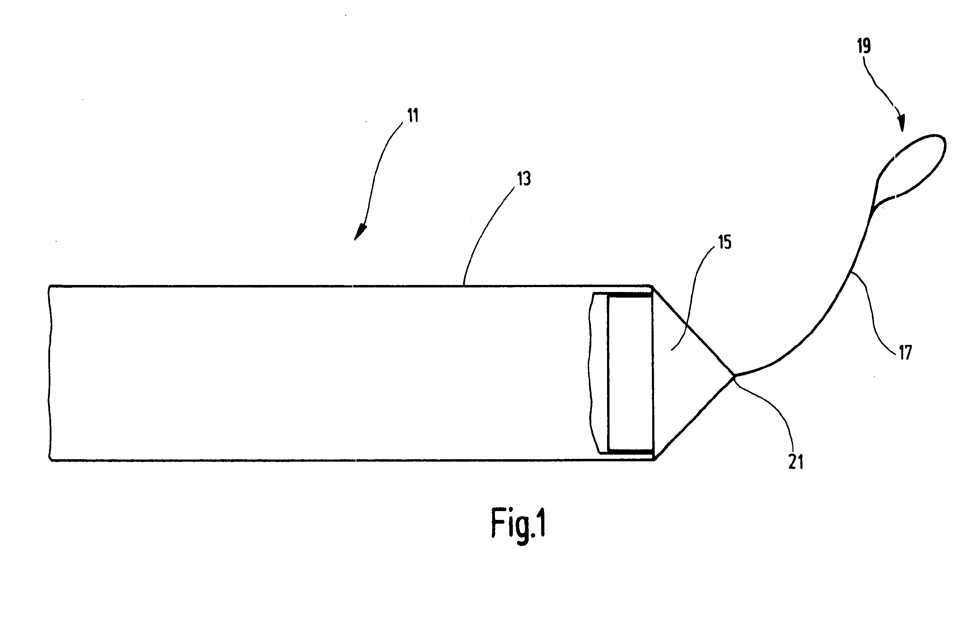

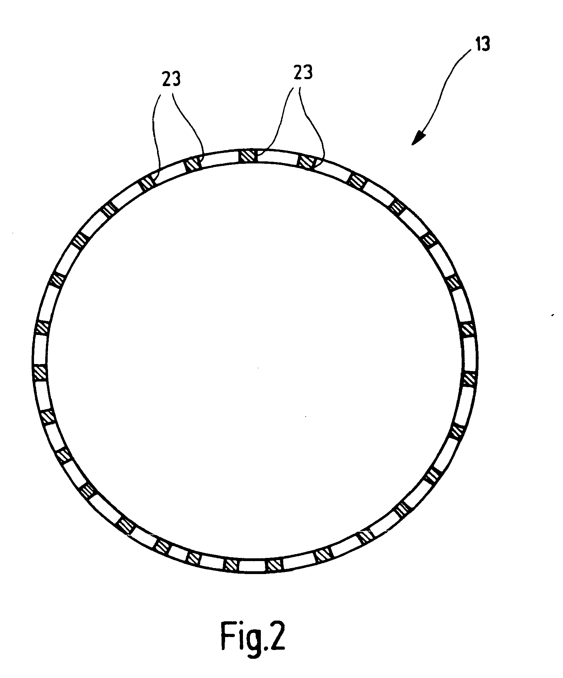

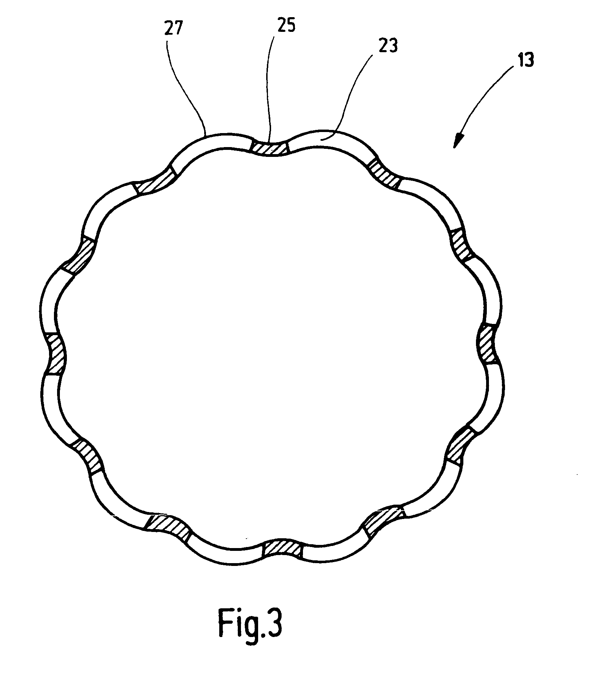

In Figur 1 ist eine Seitenansicht eines Ausführungsbeispiels eines erfindungsgemäßen Sielhautaufwuchskörpers 11 dargestellt. Der Sielhautaufwuchskörper 11 besteht im wesentlichen aus einem Rohr 13, einem Deckel 15 sowie einem Seil 17 mit einer Schlaufe 19. Die ein Querschnitt durch das in Figur 1 nur schematisch dargestellte Rohr 13 findet sich in den Figuren 2 und 3.

Der Deckel 15 ist fest mit dem Rohr 13 verbunden und weist vorteilhafter Weise eine Spitze 21 auf. Die Spitze 21 dient dazu, das Anlagern von Schwemmgut, wie beispielsweise Äste oder andere feste Gegenstände, zu verhindern. Wenn nämlich solches Schwemmgut an dem Rohr 13 hängen bleiben, kann das Seil 17 überlastet werden und reißen.

Alternativ zu dem Deckel 15, der ein separates Bauteil darstellt, können das Rohr 13 und die Spitze 21 auch einstückig ausgeführt sein.

Es hat sich als vorteilhaft erwiesen, wenn das Seil 17 als Stahlseil, insbesondere aus nicht rostendem Stahl ausgeführt wird, da dann eine hohe Zugfestigkeit erreicht wird und auch das Seil 17 durch Scheuern an der Kanalwand nicht oder nur in sehr geringem Umfang geschwächt wird.

Die Schlaufe 19 erleichtert das rasche und einfache Befestigen des Sielhautaufwuchskörpers 11 beispielsweise an den Steigeisen eines Schachts. Dazu kann ein nicht dargestellter Schekel oder ein Karabiner eingesetzt werden.

In Figur 2 ist ein Querschnitt durch ein erstes Ausführungsbeispiel eines Sielhautaufwuchskörpers 11 dargestellt. Bei diesem Ausführungsbeispiel ist die Fläche zum Anlagern von Sielhaut als Rohr 13 ausgeführt, wobei das Rohr 13 eine Vielzahl von Öffnungen 23 aufweist. Aus Gründen der Übersichtlichkeit sind nicht alle Öffnungen 23 mit Bezugszeichen versehen.

Wenn der Sielhautaufwuchskörper 11 in das Abwasser eines Siels eingebracht wird, wächst an dem Rohr 13 eine Sielhaut auf. Durch die Öffnungen 23 wächst die Sielhaut auch im Inneren der Fläche 1 auf, so dass sich auch im Inneren des Rohrs 13 ein Belag bildet, der von seiner Zusammensetzung dem an den Wänden eines Siels aufwachsenden Bewuchs entspricht.

Der im Inneren des Rohrs 13 aufgewachsene Belag (nicht dargerstellt) ist durch das Rohr 13 gegen äußere Einflüsse sehr gut geschützt. So können Äste oder andere feste Gegenstände, die im Abwasser vorhanden sind, zwar die außen am Rohr 1 aufgewachsene Sielhaut abstreifen, nicht jedoch die im inneren des Rohrs 13 aufgewachsene Sielhaut. Dies bedeutet, dass mit sehr großer Zuverlässigkeit eine ausreichende Menge von Sielhaut an dem erfindungsgemäßen Sielhautaufwuchskörper 11 aufwächst, die nach der Entnahme des Sielhautaufwuchskörpers 11 aus dem Abwasserkanal für eine Analyse zur Verfügung steht.

In Figur 3 ist eine zweites Ausführungsbeispiels eines erfindungsgemäßen Sielhautaufwuchskörpers 11 im Querschnitt dargestellt. Bei diesem Ausführungsbeispiel ist das Rohr 13 nicht nur mit Durchbrüchen 23 versehen, sondern zusätzlich sind auch noch Vertiefungen 25 und Erhebungen 27 vorhanden. Auch hier sind wieder aus Gründen der Übersichtlichkeit nicht alle Öffnungen 23, Vertiefungen 25 und Erhebungen 27 mit Bezugszeichen versehen. Durch diese makroskopisch raue Struktur der Oberfläche des Rohrs 13 wird ein weiter verbessertes Anwachsen von Sielhaut auf dem Sielhautaufwuchskörper erreicht.

Selbstverständlich können auch andere Arten makroskopischer oder mikroskopischer Aufrauungen an dem Sielhautaufwuchskörper 11 vorgesehen werden. Je rauer die Oberfläche des Rohrs 13 ist, desto leichter wächst Sielhaut auf dem Rohr 13 an und desto besser haftet die einmal aufgewachsene Sielhaut.

Es versteht sich von selbst, dass zur Herstellung des Rohres 1 vorwiegend Werkstoffe eingesetzt werden, die chemisch inert sind, so dass sie das Ergebnis der Analyse der Sielhaut nicht beeinflussen. Außerdem sollen die Werkstoffe das Anwachsen von Mikroorganismen fördern und schließlich nicht von den in Abwasserkanälen lebenden Tieren abgebissen werden.

## Patentansprüche

1. Sielhautaufwuchskörper mit einer Fläche zum Anlagern von Sielhaut und mit Mitteln zum Befestigen des Sielhautaufwuchskörpers in einem Abwasserkanal.

2. Sielhautaufwuchskörper nach Anspruch 1, **dadurch gekennzeichnet, dass** die Fläche zum Anlagern von Sielhaut eine rauhe Oberfläche aufweist.

3. Sielhautaufwuchskörper nach Anspruch 2, **dadurch gekennzeichnet, dass** die Fläche zum Anlagern von Sielhaut durch Sandstrahlen, Schleifen oder Bürsten aufgerauht ist.

4. Sielhautaufwuchskörper nach einem der vorhergehenden Ansprüche, **dadurch gekennzeichnet, dass** die Fläche zum Anlagern von Sielhaut eine Vielzahl von makroskopischen Erhebungen (27) und Vertiefungen (25) aufweist.

5. Sielhautaufwuchskörper nach einem der vorhergehenden Ansprüche, **dadurch gekennzeichnet, dass** die Fläche zum Anlagern von Sielhaut eine Vielzahl von Öffnungen (23) aufweist.

6. Sielhautaufwuchskörper nach Anspruch 5, **dadurch gekennzeichnet, dass** die Öffnungen (23) rund oder eckig sind.

7. Sielhautaufwuchskörper nach einem der vorhergehenden Ansprüche, **dadurch gekennzeichnet, dass** die Fläche zum Anlagern von Sielhaut als dreidimensionaler Körper ausgebildet ist.

8. Sielhautaufwuchskörper nach Anspruch 7, **dadurch gekennzeichnet, dass** der Körper ein Rohr (13) ist.

9. Sielhaufwuchskörper nach Anspruch 8, **dadurch gekennzeichnet, dass** das Rohr einen kreisförmigen oder vieleckigen Querschnitt aufweist.

10. Sielhautaufwuchskörper nach einem der Ansprüche 7 bis 9, **dadurch gekennzeichnet, dass** der Körper an einem Ende geschlossen ist.

11. Sielhautaufwuchskörper nach Anspruch 10, **dadurch gekennzeichnet, dass** ein Ende des Körpers durch einen Deckel (15) verschlossen ist.

12. Sielhautaufwuchskörper nach Anspruch 10 oder 11, **dadurch gekennzeichnet, dass** das geschlossene Ende des Körpers als Spitze (21) ausgebildet ist.

13. Sielhautaufwuchskörper nach einem der Ansprüche 7 bis 12, **dadurch gekennzeichnet, dass** der Körper (13) mit Aktivkohle gefüllt ist.

14. Sielhautaufwuchskörper nach einem der Ansprüche 7 bis 13, **dadurch gekennzeichnet, dass** der Körper 13() mit einem Füllstoff, insbesondere Kugeln aus einem porösen Material, wie zum Beispiel Seramis, Lavasplitt und/oder porösem Glas, gefüllt ist.

15. Sielhautaufwuchskörper nach einem der vorhergehenden Ansprüche, **dadurch gekennzeichnet, dass** der Körper 13() mindestens teilweise mit einem Schwamm, insbesondere einem grobporigen und/oder offenporigen Schwamm, oder einer Aquarienfiltermatte gefüllt ist.

16. Sielhautaufwuchskörper nach einem der vorhergehenden Ansprüche, **dadurch gekennzeichnet, dass** die Mittel zum Befestigen des Sielhautaufwuchskörpers als Seil, insbesondere als Stahlseil (17), ausgebildet sind.

17. Sielhautaufwuchskörper nach Anspruch 15, **dadurch gekennzeichnet, dass** das Stahlseil (17) kunststoffummantelt ist.

18. Sielhautaufwuchskörper nach Anspruch 15 oder 16, **dadurch gekennzeichnet, dass** das Stahlseil (17) aus nichtrostendem Stahl hergestellt ist.

19. Sielhautaufwuchskörper nach einem der Ansprüche 10 bis 17, **dadurch gekennzeichnet, dass** das Stahlseil (17) aus dem geschlossenen Ende des Körpers herausgeführt ist.

20. Sielhautaufwuchskörper nach einem der vorhergehenden Ansprüche, **dadurch gekennzeichnet, dass** die Fläche zum Anlagern von Sielhaut aus Kunststoff hergestellt ist.

21. Sielhautaufwuchskörper nach Anspruch 19, **dadurch gekennzeichnet, dass** die Fläche zum Anlagern von Sielhaut aus einem Polymer oder Copolymer, insbesondere Polypropylen, Polyäthylen, Polystyrol, Polycarbonat oder Polyester, hergestellt ist.

22. Sielhautaufwuchskörper nach einem der vorhergehenden Ansprüche, **dadurch gekennzeichnet, dass** die Fläche zum Anlagern von Sielhaut beschichtet ist.

23. Sielhautaufwuchskörper nach einem der vorhergehenden Ansprüche, **dadurch gekennzeichnet, dass** die Fläche zum Anlagern von Sielhaut mit Gelatine, Tapetenkleister, oder Geliermittel, insbesondere Apfelpektin, Agar Agar oder einer Mischung dieser Stoffe, beschichtet ist.
